# EUROPÄISCHE PATENTSCHRIFT

(11) **EP 2 764 044 B1**
(45) Veröffentlichungstag und Bekanntmachung des Hinweises auf die Patenterteilung: **16.12.2015**
(21) Anmeldenummer: 12772744.4
(22) Anmeldetag: 02.10.2012
(51) Int. Cl.: C08K 3/36, C08L 29/04, C08L 31/04, C08J 3/12, C04B 28/02, C04B 40/00, C09D 131/02, C09J 131/02

(54) **POLYMERPULVER ENTHALTENDE BAUSTOFFTROCKENFORMULIERUNGEN**
DRY BUILDING MATERIAL FORMULATIONS CONTAINING POLYMER POWDERS
FORMULATIONS SÈCHES DE MATÉRIAUX DE CONSTRUCTION CONTENANT DES POUDRES POLYMÈRES

(30) Priorität: 05.10.2011 DE 102011084048
(43) Veröffentlichungstag der Anmeldung: 13.08.2014
(73) Patentinhaber: Wacker Chemie AG, 81737 München (DE)
(72) Erfinder: KÖHLER, Thomas, Allentown, Pennsylvania 18104 (US); HÄRZSCHEL, Reinhard, 84489 Burghausen (DE)
(74) Vertreter: Ege, Markus
(86) Internationale Anmeldenummer: PCT/EP2012/069494
(87) Internationale Veröffentlichungsnummer: WO 2013/050388

(56) Entgegenhaltungen:
- EP-A1- 0 765 899
- EP-A1- 1 464 665
- WO-A1-01/29106
- CH-A- 499 560
- Anonymous: "Nyacol 2040 - Larger particle size colloidal silica", WestBond Corporation -Product Sheet, 2. August 2004 (2004-08-02), Seite 1, XP055049289, Wilmington, USA Gefunden im Internet: URL:http://nathan.instras.com/documentDB/p aper-322.pdf [gefunden am 2013-01-11]

## Beschreibung

Die Erfindung betrifft Polymerpulver enthaltende Baustofftrockenformulierungen, Verfahren zu deren Herstellung sowie deren Verwendung beispielsweise als Baustoffmassen, wie Fliesenkleber, Armierungsmassen oder Selbstverlaufsmassen.

Baustofftrockenformulierungen enthalten hydraulisch abbindende Bindemittel, wie Zement, sowie Füllstoffe, Polymerisate in Form von in Wasser redispergierbaren Pulvern (Polymerpulver) und gegebenenfalls weitere Additive. Baustoffformulierungen finden beispielsweise als Fliesenkleber, Fugenfüller, Spachtelmassen, Dichtschlämme, Putze oder Estriche Anwendung. Vor der Applikation wird den Baustofftrockenformulierungen Wasser zugegeben (Frischmörtel). An Baustoffformulierungen werden vielfältige Anforderungen gestellt. So sollen Frischmörtel über gute Verarbeitungseigenschaften verfügen, und die ausgehärteten Mörtelmassen sollen hohe mechanische Festigkeiten und eine starke Haftung auf unterschiedlichen Untergründen aufweisen, wie beispielsweise auf mineralischen Untergründen oder auf Dämmmaterialien, wie Polystyrolplatten. Zur Einstellung eines optimalen Eigenschaftsprofils werden den Baustoffformulierungen daher häufig spezielle Additive zugesetzt.

So empfiehlt die US 2007/0256600 A1, die Haftung von Baustoffmassen an Polystyrol-Untergründen durch Zugabe von Phosphatestern zu verbessern. Nachteilig ist allerdings der hohe Preis dieser Additive. Die EP 0698586 A1 lehrt für diese Zwecke den Einsatz von aromatischen Polyethern. Gegen derartige Verbindungen sind ökologische Bedenken aufgekommen. Die DE 102010042 003 A schlägt schließlich den Zusatz von Polypropylenoxiden oder Ethylenoxid-Propylenoxid-Blockcopolymeren vor. Diese führen zwar zu einer erheblichen Verbesserung der Haftung, aber auch zu einer schlechteren Verarbeitbarkeit der Frischmörtel.

Vor diesem Hintergrund bestand die Aufgabe, Baustofftrockenformulierungen bereitzustellen, die zu Frischmörtel mit besseren Verarbeitungseigenschaften führen und zudem ausgehärtete Mörtelmassen ergeben, die auf unterschiedlichen Untergründen, wie mineralischen Untergründen oder Dämmmaterialien, insbesondere Polystyrolplatten, eine verbesserte Haftung aufweisen. Diese Aufgabenstellung ist für kalkhaltige zementäre Baustofftrockenformulierungen von besonderer Relevanz.

Überraschenderweise wurde die Aufgabe durch Ausrüsten von Baustofftrockenformulierungen mit Polymerpulvern gelöst, die erhalten wurden, indem Silicasole zu wässrigen Polymerdispersionen gegeben und die so erhaltenen Dispersionen zu Polymerpulvern getrocknet wurden. Wesentlich ist also, die Silicasole den wässrigen Polymerdispersionen zuzugegeben und die Siliciumdioxid enthaltenden Verbindungen nicht ausschließlich erst den getrockneten Polymerpulvern beizumischen; letzteres entspricht der herkömmlichen Zugabe von Antiblockmitteln, die die erfindungsgemäße Aufgabe nicht löst.

Die Aufgabe konnte unerwarteter Weise noch besser gelöst werden, indem den Polymerdispersionen vor ihrer Trocknung zusätzlich verseifte 1-Alkylvinylester/Vinylester-Copolymere zugesetzt wurden.

Der Einsatz von Aluminiumsilikaten oder Kieselsäuren als Antiblockmittel für Polymerpulver ist bekannt und beispielsweise in der DE-A 2214410 beschrieben. Die Herstellung von Polymerpulvern erfolgte darin durch Sprühtrocknung von Polymerdispersionen. Bei der Sprühtrocknung wurden Antiblockmittel in fester Form gleichzeitig, aber räumlich getrennt von den Polymerdispersionen in die Sprühtrocknüngsvorrichtung eingebracht. Die DE-A 3101413 empfiehlt für ein analoges Verfahren den Einsatz von hydrophoben Kieselsäuren in fester Form als Antiblockmittel. Die GB 929704 befasst sich allgemein mit dem Sprühtrocknen von Polymerdispersionen zur Herstellung von lagerstabilen, in Wasser redispergierbaren Polymerpulvern und lehrt für diese Zwecke beispielsweise den Zusatz von Schutzkolloiden, wie Polyvinylalkoholen, oder anorganischen Partikeln, wie Calciumcarbonat oder Silica. Die CN-A 101125946 beschreibt in Wasser redispergierbare Polymerpulver enthaltend Polyvinylester, Calciumcarbonat und gegebenenfalls Organosilikone.

Die DE-A1 4124588 offenbart die Herstellung von feinteiligen Kieselsäuremikrodispersionen durch Hydrolyse von Kieselsäureestern in wässriger Ammoniak-Lösung sowie deren Einsatz in Polymerdispersionen für die Verwendung in Steinfestigern. Die EP-A 0765899 schließlich befasst sich mit dem Ausrüsten von Polymerpulvern mit flüssigen Zusatzstoffen, indem die flüssigen Zusatzstoffe auf eine Trägersubstanz, wie hochdisperse Kieselsäuren, aufgebracht werden und die geträgerten Zusatzstoffe anschließend mit einem Polymerpulver abgemischt werden.

Gegenstand der Erfindung sind Baustofftrockenformulierungen enthaltend ein oder mehrere hydraulisch abbindende Bindemittel, ein oder mehrere Füllstoffe, ein oder mehrere Polymerisate in Form von in Wasser redispergierbaren Pulvern (Polymerpulver) und gegebenenfalls ein oder mehrere Zusatzstoffe, dadurch gekennzeichnet, dass die Polymerpulver erhältlich sind durch Trocknen von wässrigen Dispersionen enthaltend ein oder mehrere Silicasole und ein oder mehrere Polymerisate von ethylenisch ungesättigten Monomeren.

Die Silicasole sind Lösungen oder kolloidale Suspensionen von Siliciumdioxid-Partikeln (SiO₂) in wässrigem Medium. Die Silicasole umfassen kolloidale Kieselsäure, Wasserglas oder Kieselsole. Die Silicasole enthalten als Lösungsmittel im Allgemeinen Wasser und vorzugsweise keine weiteren Lösungsmittel, wie organische Lösungsmittel. Die Silicasole liegen also nicht in fester Form vor. Die Silicasole haben im Allgemeinen pH-Werte von 7 bis 10.

Die Teilchengröße der Siliciumdioxid-Partikel beträgt vorzugsweise 1 bis 100 nm, besonders bevorzugt 3 bis 70 nm und am meisten bevorzugt 5 bis 50 nm (bestimmt mittels Transelektronenmikroskopie mit dem Gerät Libra 120 der Firma Zeiss).

Die Silicasole enthalten in Wasser mit einem pH-Wert von 10 und einer Temperatur von 25°C vorzugsweise 2 bis 50 Gew.-%, besonders bevorzugt 5 bis 50 Gew.-%, noch mehr bevorzugt 10 bis 50 Gew.-% und am meisten bevorzugt 20 bis 50 Gew.-% Siliciumdioxid-Partikel in gelöster oder dispergierter Form, wobei sich die Angaben in Gew.-% auf das Gesamtgewicht der Silicasole beziehen. Das Vorliegen der Silicasole in gelöster oder dispergierter Form bedeutet, dass die Siliciumdioxid-Partikel unter den vorgenannten Bedingungen in Wasser eine sedimentationsfreie Mischung bilden.

Bezogen auf das Gesamtgewicht der Polymerpulver, enthalten die Polymerpulver bevorzugt 0,1 bis 10 Gew.-%, besonders bevorzugt 0,5 bis 5 Gew.-% und am meisten bevorzugt 1 bis 3 Gew.-% Siliciumdioxid-Partikel, die von Silicasolen stammen.

Die Herstellung von Silicasolen ist dem Fachmann allgemein bekannt. Silicasole können beispielsweise durch Hydrolyse von Tetraalkoxysilanen hergestellt werden, wie beispielsweise in DE-A 4124588 beschrieben. Besonders geeignet sind hierfür Tetramethoxysilane oder Tetraethoxysilane. Den Tetraalkoxysilanen können bis zu 15 Gew.-%, vorzugsweise bis zu 10 Gew.-%, besonders bevorzugt bis zu 2 Gew.-% Organoalkoxysilane zugesetzt werden. Alternativ können Silicasole pyrogen durch Flammenhydrolyse, z.B. von Tetrachlorsilan, hergestellt werden, wie beispielsweise in DE 2620737 oder DE 4221716 beschrieben. Wasserglas ist beispielsweise erhältlich durch Zusammenschmelzen von Quarzsand mit Alkalicarbonaten bei 1400 bis 1500°C und anschließender Überführung in eine wässrige Lösung.

Die Silicasole umfassen im Allgemeinen also keine hydrophobierten Kieselsäuren, wie sie beispielsweise aus der EP0686676 A1 bekannt sind. Hydrophobierte Kieselsäuren sind beispielsweise durch Silylierung von Kieselsäuren mit Silylierungsmitteln erhältlich. Durch Silylierung werden die auf den Oberflächen der Kieselsäurepartikel befindlichen OH-Gruppen mit Silylgruppen terminiert. Beispiele für Silylierungsmittel sind Halogenalkylsilane, Halogenalkoxysilane oder Alkylalkoxysilane.

Als Polymerisate in Form von in Wasser redispergierbaren Pulvern (Polymerpulver) bezeichnet man Pulverzusammensetzungen, welche mittels Trocknung der entsprechenden wässrigen Polymerdispersionen in Gegenwart von Schutzkolloiden zugänglich werden. Aufgrund dieses Herstellungsprozesses wird das feinteilige Polymerharz der Dispersion mit einem wasserlöslichen Schutzkolloid ausreichender Menge umhüllt. Bei der Trocknung wirkt das Schutzkolloid wie ein Mantel, welcher das Zusammenkleben der Teilchen verhindert. Beim Redispergieren der Polymerpulver in Wasser löst sich das Schutzkolloid wieder in Wasser und es liegt eine wässrige Dispersion der ursprünglichen Polymerteilchen vor (Schulze J. in TIZ, No. 9, 1985).

Geeignete Polymerisate von ethylenisch ungesättigten Monomeren sind beispielsweise solche auf der Basis von einem oder mehreren Monomeren aus der Gruppe umfassend Vinylester, (Meth)-acrylsäureester, Vinylaromaten, Olefine, 1,3-Diene und Vinylhalogenide und gegebenenfalls weiteren damit copolymerisierbaren Monomeren. Die Polymerisate sind vorzugsweise nicht vernetzt.

Geeignete Vinylester sind solche von Carbonsäuren mit 1 bis 15 C-Atomen. Bevorzugt werden Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 11 C-Atomen, beispielsweise VeoVa9^{R} oder VeoVa10^{R} (Handelsnamen der Firma Resolution). Besonders bevorzugt ist Vinylacetat.

Geeignete Monomeren aus der Gruppe Acrylsäureester oder Methacrylsäureester sind Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, t-Butyl-acrylat, t-Butylmethacrylat, 2-Ethylhexylacrylat. Besonders bevorzugt sind Methylacrylat, Methylmethacrylat, n-Butylacrylat, t-Butylacrylat und 2-Ethylhexylacrylat.

Als Vinylaromaten bevorzugt sind Styrol, Methylstyrol und Vinyltoluol. Bevorzugtes Vinylhalogenid ist Vinylchlorid. Die bevorzugten Olefine sind Ethylen, Propylen und die bevorzugten Diene sind 1,3-Butadien und Isopren.

Gegebenenfalls können noch 0,1 bis 5 Gew.-%, bezogen auf das Gesamtgewicht des Monomergemisches, Hilfsmonomere copolymerisiert werden. Bevorzugt werden 0,5 bis 2,5 Gew.-% Hilfsmonomere eingesetzt. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl-, und Diisopropylester sowie Maleinsäureanhydrid; ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Diallylphthalat, Divinyladipat, Diallylmaleat, Allylmethacrylat oder Triallylcyanurat, oder nachvernetzende Comonomere, beispielsweise Acrylamidoglykolsäure (A-GA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyltri(alkoxy)- Silane, Vinyltrialkoxysilane und Vinylmethyldialkoxysilane, wobei als Alkoxygruppen beispielsweise Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder - methacrylat sowie Verbindungen wie Diacetonacrylamid und Acetylacetoxyethylacrylat oder -methacrylat.

Die Monomerauswahl bzw. die Auswahl der Gewichtsanteile der Comonomere erfolgt dabei so, das eine Glasübergangstemperatur Tg von -25°C bis +25°C, vorzugsweise -10°C bis +10°C, besonders bevorzugt -10°C bis 0°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Bevorzugt werden Mischpolymerisate von Vinylacetat mit 1 bis 50 Gew.-% Ethylen; Mischpolymerisate von Vinylacetat mit 1 bis 50 Gew.-% Ethylen und 1 bis 50 Gew.-% von einem oder mehreren weiteren Comonomeren aus der Gruppe Vinylester mit 1 bis 12 C-Atomen im Carbonsäurerest wie Vinylpropionat, Vinyllaurat, Vinylester von alpha-verzweigten Carbonsäuren mit 9 bis 13 C-Atomen wie VeoVa9, VeoVa10, VeoVa11; Mischpolymerisate von Vinylacetat, 1 bis 50 Gew.-% Ethylen und vorzugsweise 1 bis 60 Gew.-% (Meth)Acrylsäureester von unverzweigten oder verzweigten Alkoholen mit 1 bis 15 C-Atomen, insbesonders n-Butylacrylat oder 2-Ethylhexylacrylat; und Mischpolymerisate mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% (Meth)Acrylsäureester von unverzweigten oder verzweigten Alkoholen mit 1 bis 15 C-Atomen, insbesonders n-Butylacrylat oder 2-Ethylhexylacrylat, welche noch 1 bis 40 Gew.-% Ethylen enthalten; Mischpolymerisate mit Vinylacetat, 1 bis 50 Gew.-% Ethylen und 1 bis 60 Gew.-% Vinylchlorid; wobei die Polymerisate noch die genannten Hilfsmonomere in den genannten Mengen enthalten können, und sich die Angaben in Gew.-% auf jeweils 100 Gew.-% aufaddieren.

Bevorzugt werden auch (Meth)acrylsäureester-Polymerisate, wie Mischpolymerisate von n-Butylacrylat oder 2-Ethylhexylacrylat oder Copolymerisate von Methylmethacrylat mit n-Butylacrylat und/oder 2-Ethylhexylacrylat; Styrol-Acrylsäureester-Copolymerisate mit einem oder mehreren Monomeren aus der Gruppe Methylacrylat, Ethylacrylat, Propylacrylat, n-Butylacrylat, 2-Ethylhexylacrylat; Vinylacetat-Acrylsäureester-Copolymerisate mit einem oder mehreren Monomeren aus der Gruppe Methylacrylat, Ethylacrylat, Propylacrylat, n-Butylacrylat, 2-Ethylhexylacrylat und gegebenenfalls Ethylen; Styrol-1,3-Butadien-Copolymerisate; wobei die Polymerisate noch die genannten Hilfsmonomere in den genannten Mengen enthalten können, und sich die Angaben in Gew.-% auf jeweils 100 Gew.-% aufaddieren.

Am meisten bevorzugt werden in Wasser redispergierbare Polymerpulver enthaltend Mischpolymerisate mit Vinylacetat und 5 bis 50 Gew.-% Ethylen, oder Mischpolymerisate mit Vinylacetat, 1 bis 50 Gew.-% Ethylen und 1 bis 50 Gew.-% von einem Vinylester von α-verzweigten Monocarbonsäuren mit 9 bis 11 C-Atomen, oder Mischpolymerisate mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% (Meth)Acrylsäureester von unverzweigten oder verzweigten Alkoholen mit 1 bis 15 C-Atomen, welche noch 1 bis 40 Gew.-% Ethylen enthalten, oder Mischpolymerisate mit Vinylacetat, 5 bis 50 Gew.-% Ethylen und 1 bis 60 Gew.-% Vinylchlorid.

Die Polymerpulver enthalten vorzugsweise 50 bis 90 Gew.-% Polymerisate von ethylenisch ungesättigten Monomeren, bezogen auf das Gesamtgewicht der Polymerpulver.

Die Baustofftrockenformulierungen enthalten vorzugsweise 0,1 bis 25 Gew.-%, besonders bevorzugt 0,3 bis 10,0 Gew.-% und am meisten bevorzugt 0,5 bis 5,0 Gew.-% Polymerpulver, jeweils bezogen auf das Gesamtgewicht der Baustofftrockenformulierungen.

Geeignete hydraulisch abbindende Bindemittel sind beispielsweise Zemente, insbesondere Portlandzement, Aluminatzement, Trasszement, Hüttenzement, Magnesiazement, Phosphatzement oder Hochofenzement, sowie Mischzemente, Füllzemente, Flugasche, Microsilica, hydraulischer Kalk und Gips. Bevorzugt werden Portlandzement, Aluminatzement und Hüttenzement, sowie Mischzemente, Füllzemente, hydraulischer Kalk und Gips. Bevorzugt sind auch Gemische von zwei oder mehr hydraulisch abbindenden Bindemitteln, die insbesondere Zement und hydraulischen Kalk enthalten.

Im Allgemeinen enthalten die Baustofftrockenformulierungen 5 bis 50 Gew.-%, vorzugsweise 10 bis 30 Gew.-%, hydraulisch abbindende Bindemittel, jeweils bezogen auf das Gesamtgewicht der Baustofftrockenformulierungen.

Beispiele für geeignete Füllstoffe sind Quarzsand, Quarzmehl, Calciumcarbonat, Dolomit, Aluminiumsilicate, Ton, Kreide, Weißkalkhydrat, Talkum oder Glimmer, oder auch Leichtfüllstoffe wie Bims, Schaumglas, Gasbeton, Perlite, Vermiculite, Carbon-Nano-Tubes (CNT). Es können auch beliebige Gemische der genannten Füllstoffe eingesetzt werden. Bevorzugt werden Quarzsand, Quarzmehl, Calciumcarbonat, Kreide oder Weißkalkhydrat.

Im Allgemeinen enthalten die Baustofftrockenformulierungen 30 bis 90 Gew.-%, vorzugsweise 40 bis 85 Gew.-% Füllstoffe, jeweils bezogen auf das Gesamtgewicht der Baustofftrockenformulierungen.

Weitere übliche Zusatzstoffe für die Baustofftrockenformulierungen sind Verdickungsmittel, beispielsweise Polysaccharide wie Celluloseether und modifizierte Celluloseether, Stärkeether, Guar Gum, Xanthan Gum, Schichtsilikate, Polycarbonsäuren wie Polyacrylsäure und deren Teilester, sowie Polyvinylalkohole welche gegebenenfalls acetalisiert oder hydrophob modifiziert sein können, Casein und assoziativ wirkende Verdicker. Übliche Zusatzstoffe sind auch Verzögerer, wie Hydroxycarbonsäuren, oder Dicarbonsäuren oder deren Salze, Saccharide, Oxalsäure, Bernsteinsäure, Weinsäure, Gluconsäure, Zitronensäure, Sucrose, Glucose, Fructose, Sorbit, Pentaerythrit. Ein übliches Additiv sind Abbindebeschleuniger beispielsweise Alkali- oder Erdalkalisalze von anorganischen oder organischen Säuren. Darüber hinaus sind noch zu nennen: Hydrophobierungsmittel, Konservierungsmittel, Filmbildehilfsmittel, Dispergiermittel, Schaumstabilisatoren, Entschäumer und Flammschutzmittel (z.B. Aluminiumhydroxid).

Die Zusatzstoffe werden in den dafür üblichen, von der Art des Zusatzstoffes abhängigen, Mengen eingesetzt. Im Allgemeinen liegen die Mengen bei 0,1 bis 10 Gew.-%, jeweils bezogen auf das Gesamtgewicht der Baustofftrockenformulierungen.

Die Herstellung der Polymerisate erfolgt nach dem Emulsionspolymerisationsverfahren oder nach dem Suspensionspolymerisationsverfahren in Gegenwart von Schutzkolloiden, vorzugsweise nach dem Emulsionspolymerisationsverfahren, wobei die Polymerisationstemperatur im allgemeinen 20°C bis 100°C, vorzugsweise 60°C bis 90°C beträgt, und bei der Copolymerisation von gasförmigen Comonomeren wie Ethylen auch unter Druck, im allgemeinen zwischen 5 bar und 100 bar, gearbeitet werden kann. Die Initiierung der Polymerisation erfolgt mit den für die Emulsionspolymerisation bzw. Suspensionspolymerisation gebräuchlichen wasserlöslichen bzw. monomerlöslichen Initiatoren oder Redox-Initiator-Kombinationen. Beispiele für wasserlösliche Initiatoren sind Natriumpersulfat, Wasserstoffperoxid, Azobisisobutyronitril. Beispiele für monomerlösliche Initiatoren sind Dicetylperoxydicarbonat, Dicyclohexylperoxydicarbonat, Dibenzoylperoxid. Die genannten Initiatoren werden im Allgemeinen in einer Menge von 0,01 bis 0,5 Gew.-%, bezogen auf das Gesamtgewicht der Monomere, eingesetzt. Als Redox-Initiatoren verwendet man Kombinationen aus den genannten Initiatoren in Kombination mit Reduktionsmitteln. Geeignete Reduktionsmittel sind beispielsweise Natriumsulfit, Natriumhydroxymethansulfinat und Ascorbinsäure. Die Reduktionsmittelmenge beträgt vorzugsweise 0,01 bis 0,5 Gew.-%, bezogen auf das Gesamtgewicht der Monomere.

Zur Steuerung des Molekulargewichts können während der Polymerisation regelnde Substanzen eingesetzt werden. Falls Regler eingesetzt werden, werden diese üblicherweise in Mengen zwischen 0,01 bis 5,0 Gew.-%, bezogen auf die zu polymerisierenden Monomeren, eingesetzt und separat oder auch vorgemischt mit Reaktionskomponenten dosiert. Beispiele solcher Substanzen sind n-Dodecylmercaptan, tert.-Dodecylmercaptan, Mercaptopropionsäure, Mercaptopropionsäuremethylester, Isopropanol und Acetaldehyd. Vorzugsweise werden keine regelnden Substanzen verwendet.

Zur Stabilisierung des Polymerisationsansatzes werden Schutzkolloide, gegebenenfalls in Kombination mit Emulgatoren, eingesetzt. Geeignete Schutzkolloide sind teilverseifte oder vollverseifte Polyvinylalkohole; Polyvinylpyrrolidone; Polyvinylacetale; Polysaccharide in wasserlöslicher Form wie Stärken (Amylose und Amylopectin) oder Dextrine oder Cyclodextrine, Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)-acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere; kationische Schutzkolloide, beispielsweise Polymere mit Monomereinheiten mit quarternären Ammoniumgruppen. Bevorzugt werden teilverseifte oder vollverseifte Polyvinylalkohole. Besonders bevorzugt sind teilverseifte Polyvinylalkohole mit einem Hydrolysegrad von 80 bis 95 Mol% und einer Höppler-Viskosität in 4 %-iger wässriger Lösung von 1 bis 30 mPas (Methode nach Höppler bei 20°C, DIN 53015).

Nach Abschluss der Polymerisation kann zur Restmonomerentfernung in Anwendung bekannter Methoden nachpolymerisiert werden, beispielsweise durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden.

Die so erhältlichen wässrigen Polymerdispersionen haben einen Feststoffgehalt von vorzugsweise 30 bis 75 Gew.-%, besonders bevorzugt von 50 bis 60 Gew.-%.

Wesentlich für die vorliegende Erfindung ist, dass den Polymerdispersionen vor deren Trocknung ein oder mehrere Silicasole zugegeben werden. Die Silicasole werden den Polymerdispersionen im Allgemeinen also zugesetzt, bevor die Polymerdispersionen in eine Trocknungsvorrichtung, wie Sprüh-, Wirbelschicht- oder Gefriertrocknungsanlagen, eingebracht werden. Die Silicasole werden also gleichzeitig und räumlich gemeinsam mit den Polymerisaten in die Trocknungsvorrichtung eingebracht. Die erfindungsgemäß eingesetzten Siliciumdioxid-Verbindungen, d.h. die Silicasole, werden also nicht nach der Trocknung, d.h. nicht den mittels Trocknung erhaltenen Polymerpulvern, zugegeben.

Vorzugsweise enthalten die Polymerdispersionen vor der Trocknung 0,1 bis 10 Gew.-%, besonders bevorzugt 0,5 bis 5 Gew.-% und am meisten bevorzugt 1 bis 3 Gew.-% Silicasole, wobei die Angaben in Gew.-% auf dem Feststoffgehalt der Silicasole basieren und sich auf das Trockengewicht der Polymerdispersionen beziehen.

In einer bevorzugten Ausführungsform werden den Polymerdispersionen vor ihrer Trocknung zusätzlich ein oder mehrere verseifte 1-Alkylvinylester/Vinylester-Copolymere zugegeben. Verseifte 1-Alkylvinylester/Vinylester-Copolymere werden den Polymerdispersionen also vorzugsweise nach der Polymerisation zugegeben. Die verseiften 1-Alkylvinylester/Vinylester-Copolymere werden vorzugsweise gleichzeitig und räumlich gemeinsam mit den Polymerisaten in die Trocknungsvorrichtung eingebracht.

Verseifte 1-Alkylvinylester/Vinylester-Copolymere enthalten vorzugsweise 65 bis 95 Gew.-% Vinylalkoholeinheiten und 5 bis 35 Gew.-% 1-Alkylvinylalkohol-Einheiten mit C1- bis C4-Alkylgruppen. Besonders bevorzugte 1-Alkylvinylalkohol-Einheiten sind 1-Methylvinylalkoholeinheiten. Die Höppler-Viskosität der verseiften 1-Alkylvinylester/Vinylester-Copolymere beträgt bevorzugt 1 bis 5 mPa.s und besonders bevorzugt 1,5 bis 4,0 mPa.s (Methode nach Höppler gemäß DIN 53015, gemessen in 4%-iger wässriger Lösung bei 20°C). Zugänglich werden diese Copolymere durch Copolymerisatiön von Vinylacetat mit Isopropenylacetat und anschließender Verseifung. Die Herstellung ist in der DE-A 3724332 beschrieben.

Vorzugsweise enthalten die Polymerpulver 1 bis 8 Gew.-% und besonders bevorzugt 1 bis 5 Gew.-% an einem oder mehreren verseiften 1-Alkylvinylester/Vinylester-Copolymeren, bezogen auf das Gesamtgewicht der Polymerpulver.

Das Mischen der Polymerdispersionen mit den Silicasolen und gegebenenfalls den verseiften 1-Alkylvinylester/Vinylester-Copolymeren ist an keine besondere Vorgehensweise oder Vorrichtungen gebunden. Das Mischen der einzelnen Komponenten kann hierbei gleichzeitig oder nacheinander in beliebiger Reihenfolge durchgeführt werden. Das Mischen kann in den gängigen Reaktoren oder Mischbehältern erfolgen. Im Allgemeinen erfolgt das Mischen bei Temperaturen von 5 bis 35°C.

Des Weiteren werden den Polymerdispersionen im Allgemein weitere Schutzkolloide als Trocknungshilfe, zugesetzt. In der Regel wird die Trocknungshilfe in einer Gesamtmenge von 0,5 bis 30 Gew.-%, bezogen auf den Feststoffgehalt der Polymerdispersion, eingesetzt. Das heißt, die Gesamtmenge an Schutzkolloid vor dem Trocknungsvorgang soll mindestens 1 bis 30 Gew.-%, bezogen auf den Feststoffgehalt der Polymerdispersion betragen; bevorzugt werden 5 bis 20 Gew.-% bezogen auf den Feststoffgehalt der Polymerdispersion eingesetzt.

Geeignete Trocknungshilfen sind dem Fachmann bekannt und sind beispielsweise die bereits genannten Schutzkolloide. Besonders bevorzugt sind teilverseifte Polyvinylalkohole mit einem Hydrolysegrad von 80 bis 95 Mol% und einer Höppler-Viskosität in 4 %-iger wässriger Lösung von 1 bis 30 mPas (Methode nach Höppler bei 20°C, DIN 53015).

Nach Vermischung der Komponenten werden die Polymerdispersionen getrocknet. Die Trocknung der Dispersionen kann beispielsweise mittels Wirbelschichttrocknung, Gefriertrocknung oder Sprühtrocknung erfolgen. Vorzugsweise werden die Dispersionen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im Allgemeinen im Bereich von 45°C bis 120°C, bevorzugt 60°C bis 90°C, je nach Anlage, Tg des Harzes und gewünschtem Trocknungsgrad, gewählt. Die Viskosität der zu verdüsenden Speise wird über den Feststoffgehalt so eingestellt, dass ein Wert von < 500 mPas (Brookfield-Viskosität bei 20 Umdrehungen und 23°C), bevorzugt < 250 mPas, erhalten wird. Der Feststoffgehalt der zu verdüsenden Dispersion beträgt vorzugsweise 30 bis 75 Gew.-% und besonders bevorzugt 50 bis 60 Gew.-%.

Bei der Verdüsung hat sich vielfach ein Gehalt von bis zu 1,5 Gew.-% Antischaummittel, bezogen auf das Polymerisat, als günstig erwiesen.

Zur Erhöhung der Lagerfähigkeit durch Verbesserung der Verblockungsstabilität, insbesondere bei Polymerpulvern mit niedriger Glasübergangstemperatur, kann das erhaltene Polymerpulver mit einem oder mehreren Antiblockmitteln (Antibackmittel), vorzugsweise 1 bis 30 Gew.-%, bezogen auf das Gesamtgewicht polymerer Bestandteile, ausgerüstet werden. Beispiele für Antiblockmittel sind Ca- bzw. Mg-Carbonat, Talk, Gips, Kieselsäure, Kaoline wie Metakaolin, Silicate mit Teilchengrößen vorzugsweise im Bereich von 10 nm bis 10 µm. Antiblockmittel basierend auf Siliciumdioxid, wie Kieselsäuren oder Silicate, haben im Allgemeinen jedoch Teilchengrößen von 200 nm bis 10 µm und insbesondere 500 µm bis 10 µm. Die Antiblockmittel sind in Wasser bei einem pH-Wert von 10 und einer Temperatur von 25°C üblicherweise zu erheblich weniger 1 Gew.-%, bezogen auf das Gesamtgewicht der Dispersion, sedimentationsfrei dispergierbar.

Die Antiblockmittel werden also im Allgemeinen in Form von Feststoffen zugegeben. Die Antiblockmittel können gleichzeitig, aber räumlich getrennt von den Dispersionen in die Trocknungsvorrichtung eingebracht werden. Die Antiblockmittel werden den Polymerdispersionen also nicht vor der Trocknung zugesetzt.

Siliciumdioxid-Verbindungen, die einmal in fester Form vorgelegen haben, lassen sich durch bloße Zugabe von Wasser nicht mehr in die erfindungsgemäßen Silicasole überführen. Grund hierfür sind Aggregationsprozesse, die beim Isolieren der Siliciumdioxid-Verbindungen auftreten. Derartige Aggregationsprozesse treten auch auf, wenn die Polymerdispersionen und die Silicasole räumlich getrennt voneinander in die Trocknungsvorrichtung eingebracht werden.

Ein weiterer Gegenstand der Erfindung sind Verfahren zur Herstellung von Baustofftrockenformulierungen, indem ein oder mehrere hydraulisch abbindende Bindemittel, ein oder mehrere Füllstoffe, ein oder mehrere Polymerisate in Form von in Wasser redispergierbaren Pulvern (Polymerpulver) und gegebenenfalls ein oder mehrere Zusatzstoffe gemischt werden, dadurch gekennzeichnet, dass die Polymerpulver hergestellt werden durch Trocknen von wässrigen Dispersionen enthaltend ein oder mehrere Polymerisate von ethylenisch ungesättigten Monomeren und ein oder mehrere Silicasole.

Die Herstellung der Baustofftrockenformulierungen erfolgt im Allgemeinen so, dass ein oder mehrere hydraulisch abbindende Bindemittel, ein oder mehrere Füllstoffe, ein oder mehrere Polymerpulver und gegebenenfalls ein oder mehrere Zusatzstoffe zu einer Trockenmischung vermischt und homogenisiert werden. Die zur Verarbeitung der Baustofftrockenformulierungen erforderliche Wassermenge wird vor der Zubereitung hinzugefügt.

Die erfindungsgemäßen Baustofftrockenformulierungen eignen sich beispielsweise zur Herstellung von Armierungsmassen für Wärmedämmverbundsysteme, oder zur Herstellung von Klebemitteln oder Beschichtungsmitteln. Beispiele für Klebemittel sind Klebemittel für Wärmedämmplatten und Schallschutzplatten, Fliesenkleber, und Klebemittel zur Verklebung von Holz und Holzwerkstoffen. Beispiele für Beschichtungsmittel sind Mörtel, Verlaufsmassen, Estriche, Putze.

Mit den erfindungsgemäßen Baustofftrockenformulierungen sind Baustoffmassen zugänglich, die sich durch eine hervorragende Adhäsion auf verschiedenen Untergründen, wie mineralischen Untergründen oder Dämmmaterialien, insbesondere Polystyrolplatten, auszeichnen. Überraschenderweise wurde die verbesserte Haftung mit Polymerpulvern erreicht, zu deren Herstellung Silicasole eingesetzt wurden. Bisher war nicht bekannt, dass mit derartigen Siliciumdioxid-Verbindungen die Hafteigenschaften von Baustoffmassen gesteigert werden können. Dieser Befund war umso überraschender, als dass die herkömmliche Zugabe von Siliciumdioxid-Verbindungen, wie Kieselsäuren oder Silicaten, in fester Form als Antiblockmittel zu keinen Polymerpulvern führte, die die erfindungsgemäße Aufgabe lösten. Es erwies sich als wesentlich, die Polymerisate und die Siliciumdioxid-Partikel in Form von Silicasolen inniglich so zu vermischen, wie es nur geschehen kann, wenn sowohl die Polymerisate als auch die Siliciumdioxid-Partikel gemeinsam in wässriger und dispergierter Form vorliegen. Dabei tritt eine intensive Interaktion zwischen den Siliciumdioxid-Partikeln und den weiteren Bestandteilen der Polymerdispersionen auf. Deswegen erfolgt bei der erfindungsgemäßen Trocknung der Polymerdispersionen auch nicht in dem Maße eine Selbstkondensation der Siliciumdioxid-Verbindungen der Silicasole, wie sie bei der Trocknung von reinen Silicasolen auftritt. Auch aus diesem Grunde unterscheiden sich die erfindungsgemäßen Polymerpulver strukturell von herkömmlichen Polymerpulvern, denen beispielsweise Kieselsäure oder Silicate als Antiblockmittel zugesetzt wurde.

Der mit den erfindungsgemäßen Baustofftrockenformulierungen erzielte Haftungseffekt konnte mit erfindungsgemäßen Polymerpulvern, die zusätzlich verseifte 1-Alkylvinylester/Vinylester-Copolymere enthielten, überraschenderweise noch weiter gesteigert werden. Der erfindungsgemäße Einsatz von Silicasolen und der verseiften 1-Alkylvinylester/Vinylester-Copolymere wirkt sich in synergistischer Weise auf die Haftungseigenschaften der Baustoffmassen aus.

Die erfindungsgemäß zugänglichen Baustoffmassen zeichnen sich zudem durch eine hervorragende Verarbeitbarkeit aus. Ohne an eine Theorie gebunden zu sein wird angenommen, dass wässrige Baustoffmassen von erfindungsgemäßen Baustofftrockenformulierungen Luft besser stabilisieren können als herkömmliche Baustoffmassen, so dass die erfindungsgemäßen Baustoffmassen leichter verarbeitbar sind. Vor diesem Hintergrund war es umso überraschender, dass die erfindungsgemäß hergestellten Baustoffmassen zugleich auch besser auf Untergründen haften. Denn eine stärkere Stabilisierung von Luft sollte erwartungsgemäß einen negativen Einfluss auf die Haftung der Baustoffmassen auf Untergründen haben. Stattdessen wurden bei der erfindungsgemäßen Vorgehensweise eine bessere Verarbeitbarkeit und zugleich eine bessere Haftung der Baustoffmassen auf Untergründen festgestellt. Diese Effekte sind insbesondere im Falle von Kalkhaltigen Baustoffmassen von besonderem Interesse.

Die nachfolgenden Beispiele dienen zur weiteren Erläuterung der Erfindung.

### Herstellung der Polymerpulver:

### Dispersionspulver 1:

400 Gew.-Teile einer wässrigen Polymerdispersion (Vinylacetat-Ethylen-Copolymer; Tg von -7°C; Feststoffgehalt 50%; stabilisiert mit Polyvinylalkohol (Höppler-Viskosität von 5 mPa·s, Hydrolysegrad von 88 Mol%)) wurden mit 40 Gew.-Teilen einer wässrigen Lösung eines Polyvinylalkohols (Höppler-Viskosität von 5 mPa·s, Hydrolysegrad von 88 Mol%;

### Festgehalt 20%) und

20 Gew.-Teilen einer wässrigen Lösung von PME (vollverseiftes Copolymer aus Isopropenylacetat und Vinylacetat mit einem Hydrolysegrad von > 98%, Höppler-Viskosität von 2,3 mPa·s, Isopropenylacetat-Anteil von 20 Mol%; Festgehalt 20%) sowie 10 Gew.-Teilen Silicasol (Bindzil 2040, Handelsname der Firma Ekanobel; Festgehalt 40%) und 75 Gew.-Teilen Wasser versetzt und gründlich gemischt.

Die so erhaltene Dispersion wurde mittels einer Zweistoffdüse versprüht. Als Verdüsungskomponente diente 4 bar Druckluft, die gebildeten Tropfen wurden mit auf 125°C erhitzter Luft im Gleichstrom getrocknet. Das trockene Polymerpulver wurde mit 12 Gew.-% handelsüblichem Antiblockmittel (Gemisch aus Calcium-Carbonat und Kaolin) versetzt.

### Dispersionspulver 2 (Vergleichspulver 2):

Analog zu Dispersionspulver 1, mit dem Unterschied, dass 40 Gew.-Teile der wässrigen Lösung von PME, aber kein Silicasol zum Einsatz kam.

### Dispersionspulver 3:

Analog zu Dispersionspulver 1, mit dem Unterschied, dass 20 Gew.-Teile des Silicasols (Bindzil 2040), aber kein PME zum Einsatz kam.

### Dispersionspulver 4 (Vergleichspulver 4):

Analog zu Dispersionspulver 1, mit dem Unterschied, dass kein PME und kein Silicäsol zum Einsatz kam.

### Herstellung und Austestung der Mörtelmassen

Zur Herstellung der Mörtelmassen für die (Vergleichs)beispiele 1 bis 4 wurden die in Tabelle 1 genannten Bestandteile, in den dort aufgeführten Mengen, mit jeweils den in der Tabelle 1 genannten Mengen an Wasser zu der Mörtelmasse angerührt.

Zur Testung wurden die Mörtelmassen jeweils als Armierungsmörtel in einer Schichtdicke von 4 mm auf EPS-Platten (expanded polystyrene) aufgetragen.

Nach Aushärtung der Armierungsschicht und Lagerung der Testkörper wurden die Haftzugfestigkeit sowie der Ausriss auf EPS-Platten gemäß Prüfmethode DIN 18555-6 festgestellt. Es wurde unter zwei verschiedenen Bedingungen gelagert:
14 Tage bei Normalklima bei 23°C und 50 % relative Feuchte (NK),
oder 12 Tage bei Normalklima und anschließend 2 Tage Wasserlagerung bei 23°C.
Die Ergebnisse der Testung sind in Tabelle 1 zusammengefasst.

Die Ergebnisse der Tabelle 1 zeigen, dass mit den erfindungsgemäß modifizierten Mörteln (Tabelle 1: Beispiele 1 und 3) die Haftung (siehe Haftzugwerte und EPS-Ausriss) zur Wärmedämmplatte im Vergleich zum Vergleichsbeispiel 4 verbessert ist. Der gemeinsame Einsatz von Bindzil und PME führt zu den besten Ergebnisse bezüglich Haftzug und EPS-Ausriss (Tabelle 1: Beispiele 1 und 3).

**Tabelle: Haftung und Ausriss der Kleber auf EPS:**

| | Bsp. 1 | V.bsp. 2 | Bsp. 3 | V.bsp. 4 |
|---|---|---|---|---|
| Rezeptur (Bestandteile in Gew.T) | | | | |
| Weißzement 42,5 | 130 | 130 | 130 | 130 |
| Edelkalkhydrat | 40 | 40 | 40 | 40 |
| Quarzsand AKW 9a | 520 | 520 | 520 | 520 |
| Calciumcarbonat MHS | 283,5 | 283,5 | 283,5 | 283,5 |
| Celluloseether | 1,5 | 1,5 | 1,5 | 1,5 |
| Dispersionspulver 1 | 25 | | | |
| Dispersionspulver 2 | | 25 | | |
| Dispersionspulver 3 | | | 25 | |
| Dispersionspulver 4 | | | | 25 |
| Wasser in ml pro 1000 g | 250 | 250 | 250 | 250 |
| | | | | |
| Testergebnisse: | | | | |
| | | | | |
| Haftzug N/mm² (14 d NK) | 0,13 | 0,11 | 0,12 | 0,09 |
| Haftzug N/mm² (12 d NK + 2d H₂O) | 0,10 | 0,08 | 0,08 | 0,05 |
| EPS-Ausriss % (14 d NK) | 100 | 80 | 85 | 60 |
| EPS-Ausriss % (12 d NK + 2d H₂O) | 80 | 60 | 55 | 25 |

## Patentansprüche

1. Baustofftrockenformulierungen enthaltend ein oder mehrere hydraulisch abbindende Bindemittel, ein oder mehrere Füllstoffe, ein oder mehrere Polymerisate in Form von in Wasser redispergierbaren Pulvern (Polymerpulver) und gegebenenfalls ein oder mehrere Zusatzstoffe, **dadurch gekennzeichnet, dass**
die Polymerpulver erhältlich sind durch Trocknen von wässrigen Dispersionen enthaltend ein oder mehrere Silicasole und ein oder mehrere Polymerisate von ethylenisch ungesättigten Monomeren.

2. Baustofftrockenformulierungen nach Anspruch 1, **dadurch gekennzeichnet, dass** ein oder mehrere Silicasole ausgewählt werden aus der Gruppe umfassend kolloidale Kieselsäure, Wasserglas und Kieselsole.

3. Baustofftrockenformulierungen nach Anspruch 1 oder 2, **dadurch gekennzeichnet, dass** die Silicasole Siliciumdioxid-Partikel mit Teilchengrößen von 2 bis 100 nm enthalten (Bestimmung mittels Transelektronenmikroskopie).

4. Baustofftrockenformulierungen nach Anspruch 1 bis 3, **dadurch gekennzeichnet, dass** die Silicasole bei einer Temperatur von 25°C und einem pH-Wert von 10 2 bis 50 Gew.-% Siliciumdioxid-Partikel in gelöster oder dispergierter Form enthalten, wobei sich die Angaben in Gew.-% auf das Gesamtgewicht der Silica-Sole beziehen.

5. Baustofftrockenformulierungen nach Anspruch 1 bis 4, **dadurch gekennzeichnet, dass** die Polymerpulver 0,1 bis 10 Gew.-% Siliciumdioxid-Partikel, die von Silicasolen stammen, enthalten, bezogen auf das Gesamtgewicht der Polymerpulver.

6. Baustofftrockenformulierungen nach Anspruch 1 bis 5, **dadurch gekennzeichnet, dass** ein oder mehrere ethylenisch ungesättigten Monomeren ausgewählt werden aus der Gruppe umfassend Vinylester, (Meth)acrylsäureester, Vinylaromaten, Olefine, 1,3-Diene und Vinylhalogenide.

7. Baustofftrockenformulierungen nach Anspruch 1 bis 6, **dadurch gekennzeichnet, dass** die Baustofftrockenformulierungen 0,1 bis 25 Gew.-% Polymerpulver enthalten, bezogen auf das Gesamtgewicht der Baustofftrockenformulierungen.

8. Baustofftrockenformulierungen nach Anspruch 1 bis 7, **dadurch gekennzeichnet, dass** die Polymerpulver erhältlich sind, indem ein oder mehrere Silicasole gleichzeitig und räumlich gemeinsam mit einem oder mehreren Polymerisaten in eine Vorrichtung zum Trocknen eingebracht werden.

9. Baustofftrockenformulierungen nach Anspruch 1 bis 8, **dadurch gekennzeichnet, dass** die Polymerpulver erhältlich sind durch Trocknen von wässrigen Dispersionen enthaltend ein oder mehrere Silicasole, ein oder mehrere Polymerisate von ethylenisch ungesättigten Monomeren und ein oder mehrere verseifte 1-Alkylvinylester/Vinylester-Copolymere.

10. Baustofftrockenformulierungen nach Anspruch 9 **dadurch gekennzeichnet, dass** die verseiften 1-Alkylvinylester/Vinylester-Copolymere 65 bis 95 Gew.-% Vinylalkoholeinheiten und 5 bis 35 Gew.-% 1-Alkylvinylalkohol-Einheiten mit C1-bis C4-Alkylgruppen, vorzugsweise 1-Methylvinylalkoholeinheiten, enthalten.

11. Baustofftrockenformulierungen nach Anspruch 1 bis 10 **dadurch gekennzeichnet, dass** ein oder mehrere Polymerpulver 1 bis 8 Gew.-% an einem oder mehreren verseiften 1-Alkylvinylester/Vinylester-Copolymeren enthalten, bezogen auf das Gesamtgewicht der Polymerpulver.

12. Baustofftrockenformulierungen nach Anspruch 1 bis 11 **dadurch gekennzeichnet, dass** ein oder mehrere Polymerpulver ein oder mehrere Antiblockmittel ausgewählt aus der Gruppe umfassend Ca- bzw. Mg-Carbonat, Talk, Gips, Kieselsäure, Kaoline und Silicate enthalten.

13. Baustofftrockenformulierungen nach Anspruch 1 bis 12 **dadurch gekennzeichnet, dass** die Polymerisate eine Glasübergangstemperatur Tg von -25°C bis +25°C haben (bestimmt mittels Differential Scanning Calorimetry).

14. Baustofftrockenformulierungen nach Anspruch 1 bis 13 **dadurch gekennzeichnet, dass** zu wässrigen Dispersionen enthaltend ein oder mehrere Polymerisate vor dem Trocknen ein oder mehrere Silicasole gegeben werden.

15. Verfahren zur Herstellung von Baustofftrockenformulierungen, indem ein oder mehrere hydraulisch abbindende Bindemittel, ein oder mehrere Füllstoffe, ein oder mehrere Polymerisate in Form von in Wasser redispergierbaren Pulvern (Polymerpulver) und gegebenenfalls ein oder mehrere Zusatzstoffe gemischt werden, **dadurch gekennzeichnet, dass** die Polymerpulver hergestellt werden durch Trocknen von wässrigen Dispersionen enthaltend ein oder mehrere Silicasole und ein oder mehrere Polymerisate von ethylenisch ungesättigten Monomeren.

16. Verwendung der Baustofftrockenformulierungen aus Anspruch 1 bis 14 zur Herstellung von Armierungsmassen für Wärmedämmverbundsysteme, oder zur Herstellung von Klebemitteln oder Beschichtungsmitteln.

17. Verwendung der Baustofftrockenformulierungen nach Anspruch 16 als Klebemittel für Wärmedämmplatten oder Schallschutzplatten, Fliesenkleber, als Klebemittel zur Verklebung von Holz oder Holzwerkstoffen oder als Beschichtungsmittel, wie Mörtel, Verlaufsmassen, Estriche oder Putze.

## Claims

1. Dry building material formulations comprising one or more hydraulically setting binders, one or more fillers, one or more polymers in the form of water-redispersible powders (polymer powders), and optionally one or more additives, **characterized in that**
the polymer powders are obtainable by drying aqueous dispersions comprising one or more silica sols and one or more polymers of ethylenically unsaturated monomers.

2. Dry building material formulations according to Claim 1, **characterized in that** one or more silica sols are selected from the group encompassing colloidal silica, waterglass and siliceous sols.

3. Dry building material formulations according to Claim 1 or 2, **characterized in that** the silica sols comprise silicon dioxide particles having particle sizes of 2 to 100 nm (determination by means of transmission electron microscopy).

4. Dry building material formulations according to Claim 1 to 3, **characterized in that** at a temperature of 25°C and a pH of 10, the silica sols comprise 2% to 50% by weight of silicon dioxide particles in dissolved or dispersed form, the figures in % by weight being based on the total weight of the silica sols.

5. Dry building material formulations according to Claim 1 to 4, **characterized in that** the polymer powders comprise 0.1% to 10% by weight of silicon dioxide particles which originate from silica sols, based on the total weight of the polymer powders.

6. Dry building material formulations according to Claim 1 to 5, **characterized in that** one or more ethylenically unsaturated monomers are selected from the group encompassing vinyl esters (meth)acrylic esters, vinylaromatics, olefins, 1,3-dienes and vinyl halides.

7. Dry building material formulations according to Claim 1 to 6, **characterized in that** the dry building material formulations comprise 0.1% to 25% by weight of polymer powders, based on the total weight of the dry building material formulations.

8. Dry building material formulations according to Claim 1 to 7, **characterized in that** the polymer powders are obtainable by introducing one or more silica sols simultaneously and spatially jointly with one or more polymers into a device for drying.

9. Dry building material formulations according to Claim 1 to 8, **characterized in that** the polymer powders are obtainable by drying aqueous dispersions comprising one or more silica sols, one or more polymers of ethylenically unsaturated monomers, and one or more hydrolysed 1-alkylvinyl ester/vinyl ester copolymers.

10. Dry building material formulations according to Claim 9, **characterized in that** the hydrolysed 1-alkylvinyl ester/vinyl ester copolymers contain 65% to 95% by weight of vinyl alcohol units and 5% to 35% by weight of 1-alkylvinyl alcohol units having C1 to C4 alkyl groups, preferably 1-methylvinyl alcohol units.

11. Dry building material formulations according to Claim 1 to 10, **characterized in that** one or more polymer powders comprise 1% to 8% by weight of one or more hydrolysed 1-alkylvinyl ester/vinyl ester copolymers, based on the total weight of the polymer powders.

12. Dry building material formulations according to Claim 1 to 11, **characterized in that** one or more polymer powders comprise one or more anti-blocking agents selected from the group encompassing Ca carbonate and Mg carbonate, talc, gypsum, silica, kaolins and silicates.

13. Dry building material formulations according to Claim 1 to 12, **characterized in that** the polymers have a glass transition temperature Tg of -25°C to +25°C (determined by means of Differential Scanning Calorimetry).

14. Dry building material formulations according to Claim 1 to 13, **characterized in that** aqueous dispersions comprising one or more polymers are admixed, prior to drying, with one or more silica sols.

15. Method for producing dry building material formulations by mixing one or more hydraulically setting binders, one or more fillers, one or more polymers in the form of water-redispersible powders (polymer powders), and optionally one or more additives, **characterized in that** the polymer powders are prepared by drying aqueous dispersions comprising one or more silica sols and one or more polymers of ethylenically unsaturated monomers.

16. Use of the dry building material formulations from Claim 1 to 14 for the production of reinforcing compositions for thermal insulation composite systems, or for producing adhesives or coating materials.

17. Use of the dry building material formulations according to Claim 16 as adhesives for thermal insulation panels or soundproofing panels, tile adhesives, as adhesives for bonding wood or wood-based materials, or as coating materials, such as mortars, levelling compositions, screeds or renders.

## Revendications

1. Formulations sèches de matériau de construction contenant un ou plusieurs liants à prise hydraulique, une ou plusieurs charges, un ou plusieurs polymères sous forme de poudres redispersibles dans l'eau (poudres polymères) et le cas échéant un ou plusieurs additifs, **caractérisées en ce que** les poudres polymères peuvent être obtenues par séchage de dispersions aqueuses contenant un ou plusieurs sols siliciques et un ou plusieurs polymères de monomères éthyléniquement insaturés.

2. Formulations sèches de matériau de construction selon la revendication 1, **caractérisées en ce qu'**un ou plusieurs sols siliciques sont choisis dans le groupe comprenant les silices colloïdales, le verre soluble et les sols de silice.

3. Formulations sèches de matériau de construction selon la revendication 1 ou 2, **caractérisées en ce que** les sols siliciques contiennent des particules de dioxyde de silicium présentant des grosseurs de particule de 2 à 100 nm (détermination par microscopie électronique par transmission).

4. Formulations sèches de matériau de construction selon la revendication 1 à 3, **caractérisées en ce que** les sols siliciques contiennent, à une température de 25°C et à un pH de 10, 2 à 50% en poids de particules de dioxyde de silicium sous forme dissoute ou dispersée, les indications en % en poids se rapportant au poids total des sols siliciques.

5. Formulations sèches de matériau de construction selon la revendication 1 à 4, **caractérisées en ce que** les poudres polymères contiennent 0,1 à 10% en poids de particules de dioxyde de silicium qui proviennent des sols siliciques, par rapport au poids total des poudres polymères.

6. Formulations sèches de matériau de construction selon la revendication 1 à 5, **caractérisées en ce qu'**un ou plusieurs monomères éthyléniquement insaturés sont choisis dans le groupe comprenant les esters de vinyle, les esters de l'acide (méth)acrylique, les aromatiques de vinyle, les oléfines, les 1,3-diènes et les halogénures de vinyle.

7. Formulations sèches de matériau de construction selon la revendication 1 à 6, **caractérisées en ce que** les formulations sèches de matériau de construction contiennent 0,1 à 25% en poids de poudres polymères, par rapport au poids total des formulations sèches de matériau de construction.

8. Formulations sèches de matériau de construction selon la revendication 1 à 7, **caractérisées en ce que** les poudres polymères peuvent être obtenues par l'introduction d'un ou de plusieurs sols siliciques, simultanément et en commun dans l'espace, avec un ou plusieurs polymères dans un dispositif en vue du séchage.

9. Formulations sèches de matériau de construction selon la revendication 1 à 8, **caractérisées en ce que** les poudres polymères peuvent être obtenues par séchage de dispersions aqueuses contenant un ou plusieurs sols siliciques, un ou plusieurs polymères de monomères éthyléniquement insaturés et un ou plusieurs copolymères saponifiés d'ester de 1-alkylvinyle/ester de vinyle.

10. Formulations sèches de matériau de construction selon la revendication 9, **caractérisées en ce que** les copolymères saponifiés d'ester de 1-alkylvinyle/ester de vinyle contiennent 65 à 95% en poids d'unités d'alcool vinylique et 5 à 35% en poids d'unités d'alcool 1-alkylvinylique présentant des groupes alkyle en C1-C4, de préférence d'unités d'alcool 1-méthylvinylique.

11. Formulations sèches de matériau de construction selon la revendication 1 à 10, **caractérisées en ce qu'**une ou plusieurs poudres polymères contiennent 1 à 8% en poids d'un ou de plusieurs copolymères saponifiés d'ester de 1-alkylvinyle/ester de vinyle, par rapport au poids total des poudres polymères.

12. Formulations sèches de matériau de construction selon la revendication 1 à 11, **caractérisées en ce qu'**une ou plusieurs poudres polymères contiennent un ou plusieurs agents antiadhésifs choisis dans le groupe comprenant le carbonate de Ca ou de Mg, le talc, le plâtre, la silice, les kaolins et des silicates.

13. Formulations sèches de matériau de construction selon la revendication 1 à 12, **caractérisées en ce que** les polymères présentent une température de transition vitreuse Tg de -25°C à +25°C (déterminée par calorimétrie différentielle à balayage).

14. Formulations sèches de matériau de construction selon la revendication 1 à 13, **caractérisées en ce qu'**on ajoute, avant le séchage, un ou plusieurs sols siliciques à des dispersions aqueuses contenant un ou plusieurs polymères.

15. Procédé pour la préparation de formulations sèches de matériau de construction par le mélange d'un ou de plusieurs liants à prise hydraulique, d'une ou de plusieurs charges, d'un ou de plusieurs polymères sous forme de poudres redispersibles dans l'eau (poudres polymères) et le cas échéant d'un ou de plusieurs additifs, **caractérisé en ce que** les poudres polymères sont préparées par séchage de dispersions aqueuses contenant un ou plusieurs sols siliciques et un ou plusieurs polymères de monomères éthyléniquement insaturés.

16. Utilisation des formulations sèches de matériau de construction de la revendication 1 à 14 pour la préparation de masses d'armature pour des systèmes composites d'isolation thermique ou pour la préparation d'adhésifs ou d'agents de revêtement.

17. Utilisation des formulations sèches de matériau de construction selon la revendication 16 comme adhésif pour des panneaux d'isolation thermique ou des panneaux de protection sonore, des colles pour carreaux, comme adhésifs pour le collage de bois ou de matériaux à base de bois ou comme agents de revêtement, tels que des mortiers, des masses autonivelantes, des chapes ou des enduits.
